(19) Europäisches Patentamt
European Patent Office
Office européen des brevets

(11) **EP 2 547 109 A1**

(12) **EUROPEAN PATENT APPLICATION**

(43) Date of publication:
**16.01.2013 Bulletin 2013/03**

(51) Int Cl.:
***H04N 13/00*** *(2006.01)*

(21) Application number: **11173451.3**

(22) Date of filing: **11.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Doyen, Didier**
**35510 CESSON SEVIGNE (FR)**

• **Thiebaud, Sylvain**
**35510 CESSON SEVIGNE (FR)**
• **Robert, Philippe**
**35510 CESSON SEVIGNE (FR)**

(74) Representative: **Ruellan-Lemonnier, Brigitte**
**Technicolor**
**European Patent Operations**
**1-5 Rue Jeanne d'Arc**
**92443 Issy-les-Moulineaux Cedex (FR)**

(54) **Automatic conversion in a 2D/3D compatible mode**

(57)      The invention concerns a device and a method for generating on a defined display screen of determined size (SS) a 3D image including a left view( 1) and a right view (2) from an incoming video signal to be viewed at a distance by a viewer.

The device comprises:
- Means for measuring the distance (D) between the viewer and the display;
- means 7 for determining a disparity threshold value in relation with the determined size of the display screen 5 and the measured distance 6 to achieve a 2D and 3D compatibility level;
- means 4 for editing a disparity map corresponding to the values of disparity between the left and the right views;
- means 8 for analyzing with an histogram the disparity values of the disparity map in comparison to the determined threshold value;
- and means 9 for replacing one of the left or right view by a view interpolation so that the disparity level of the histogram is below the determined threshold value, if the disparity level of the histogram is above the determined disparity threshold value.

Figure 9

## Description

The present invention relates to image processing and display systems uses to render the 3D effect and more particularly to a method and device comprising an automatic conversion in a 2D/3D compatible mode.

The present invention concerns video processing to achieve pair of stereo views with an adapted level of depth. This is applicable for any display video, TV or movie technology able to render 3D.

The display devices that are used to implement the invention are generally able to display at least two different views of each 3D image to display, one view for each eye of the spectator. In a manner known per se, the spatial differences between these two views (stereoscopic information) are exploited by the Human Visual System to provide the depth perception.

There are number of techniques for presenting a 3D content, where each 3D image is composed of two different views.

The most popular technique is the well known anaglyph technology, where one or two components of the three components RGB displays are used to display the first view, the others component are used to display the second one. Thanks to filtering glasses, the first view is applied to the left eye, the second one to the right eye. This technique does not require dedicated display devices but one major drawback of this technique is the alteration of colours.

Other stereoscopic displays technologies, which require actives or passive glasses, can be used to display 3D images. In this case, the information for the right and the left eyes have to be multiplexed:

- This multiplexing can be temporal as it is for the sequential systems requiring active glasses. These active glasses work like shutters synchronized with the video frame rate. Such systems need high video frame rate to avoid flicker. They can notably work with digital cinema systems as those using DLP or with plasma and LCD display devices because they have high frame rate capabilities.
- This multiplexing can be spectral. The information provided to the right eye and the left eye have different spectrum. Thanks to dichroïc or colored filters, passive glasses select the part of the spectrum to be provided to each eye, like the Dolby 3D system in digital cinema.
- This multiplexing can be spatial. Some large size 3D LCD display devices are based on this spatial multiplexing. The video lines to be perceived by each eye have different polarizations and are interleaved. Different polarizations are applied to the odd rows and the even rows by the display device. These different polarizations are filtered for each eye thanks to polarized passive glasses.

Auto-stereoscopic or multi-views display devices using for example lenticular lenses do not require the user to wear glasses and are becoming more available for both home and professional entertainments. Many of these display devices operate on the "2D + depth" format. In this format, the 2D video and the depth information are combined by the display device to create the 3D effect.

Depth perception is possible thanks to monocular depth cues (such as occlusion, perspective, shadows, ..) and also thanks to a binocular cue called the binocular disparity. The following description in Figure 1 explains how the 3D effect is perceived by this physiological depth cue.

- When the two eyes of a viewer (or of a camera) are converging on the same object A so that this object appears centered on each retina of these eyes, more distant objects B (or closer C) will generate 2 images of the same object at different locations on each retina. The difference between these 2 locations provides a depth cue.

- When this difference is small, namely when B or C are close enough to A, the brain fuses the 2 locations into one.

- This phenomenon is called disparity when analyzed on the retina

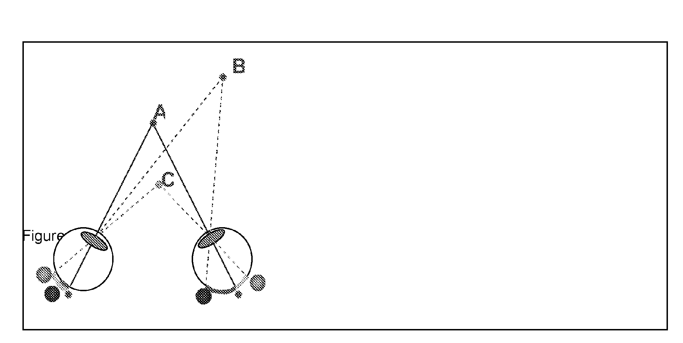

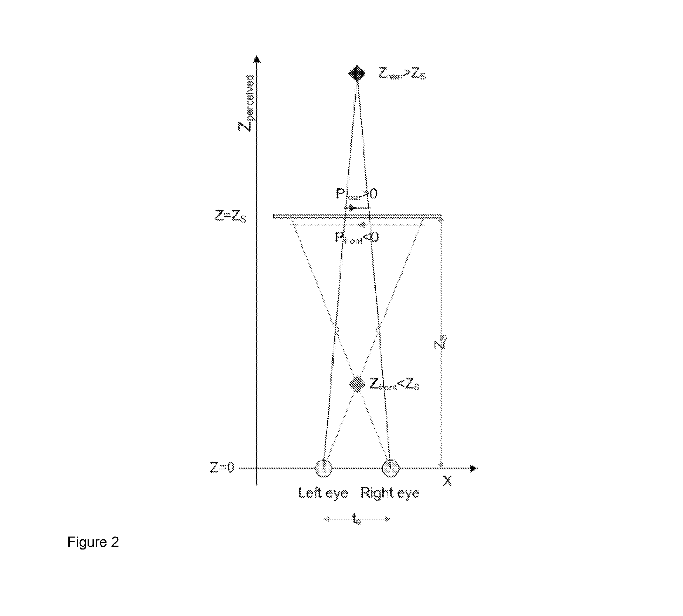

I In figure 2 we illustrate the relationship between the perceived depth and what is called the parallax between left and right-eye images of a stereo pair.

- ■ Zp: perceived depth (m)
- ■ P: parallax between left- and right-eye images
- ■ d: transmitted disparity information
- ■ $t_e$: inter-ocular distance (m)
- ■ $Z_s$: distance from viewer to screen (m)
- ■ $W_s$: width of the screen (m)
- ■ $N_{col}$: number of columns (pixels)

We see that the level of parallax on the screen (x-position difference of an object between right and left eye) will render the depth information. Of course the distance to the screen will also be part of the final depth perception.

Relationship between depth perceived, parallax and distance to the screen is expressed as followed:

$$\begin{cases} Z_p = \dfrac{Z_s \times t_e}{t_e - P} \\[2em] P = \dfrac{W_s}{N_{col}} \times d \end{cases}$$

View interpolation with disparity maps consists in interpolating an intermediate view from one or two different reference views of a same 3D scene, taking into account the disparity of the pixels between these different views.

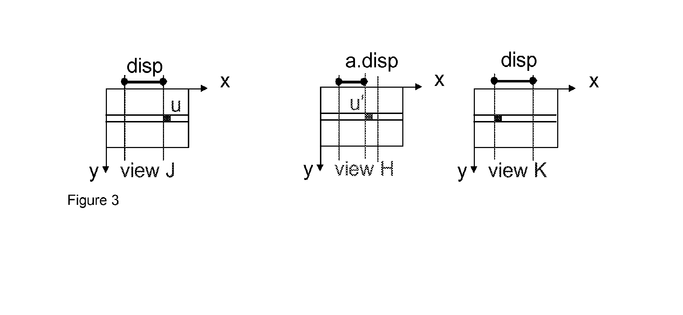

View interpolation requires the projection of the reference views onto the virtual one along the disparity vectors that link the reference views. Specifically, let us consider two reference views J and K and a virtual view H located between them (Figure 3). View interpolation is carried out in 3 steps:

1. Computation of the disparity map for intermediate virtual view H by projecting the complete disparity map of view J on H and assignment of the disparity values to the pixels in H
2. Filling the holes in the reconstructed disparity map of view H through spatial interpolation
3. Interpolation of the intermediate image H through disparity compensation from J and K except for the filled pixels that are interpolated from K only

Figure 3 illustrates the first step. Pixel u in view J has the disparity value disp(u). The corresponding point in view K is defined by u-disp(u) and is located on the same line (no vertical displacement). The corresponding point in view H is defined by u-a.disp(u), where the scale factor a is the ratio between baselines JH and JK (the views are aligned).

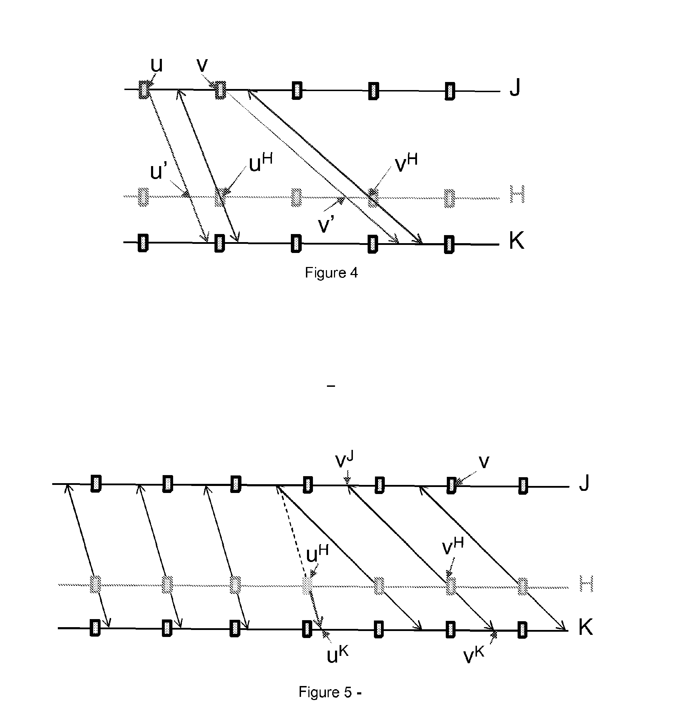

Figure 4 shows more explicitly the first step. The disparity-compensated interpolation (1D view) is represented by u' and v' in the virtual view H are estimated respectively from u and v in J with their disparity values disp(u) and disp(v). The disparity values are then assigned to the closest pixels uH and vH. The point in H corresponding to pixel u is located at u'=u-a.disp(u). This disparity value is assigned to the closest pixel $u^H$.

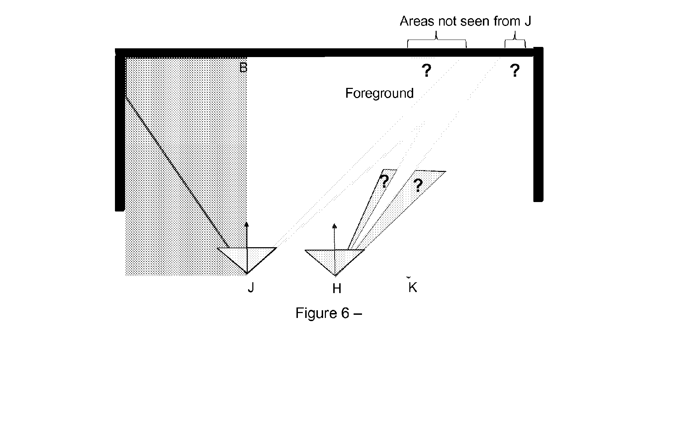

Only one disparity map (e.g. J, and not K) is projected. The situation is illustrated in Figure 6. During the first step, the disparity map of view J is projected onto virtual view H. Yet some areas are seen from view H and not from view J (areas with question mark in Figure 6).

As in the present solution, the disparity map of view K is not projected, the gaps in the "H" map must be filled by spatial interpolation of the disparity.

The filling process is carried out in 4 steps:

1. Filling the small holes of 1-pixel width by averaging the 2 neighboring disparity values (these holes are generally inherent to the quantization of the disparity values and can be simply linearly interpolated)
2. Removing the horizontally isolated pixels with a disparity value and such that left and right adjacent pixels are empty.
3. Filling the larger holes in the disparity map: these areas are supposed to belong to the background and to be close to a foreground that hide them in the other view. So, they are interpolated through propagation of either the left or right side disparity value: the smallest value is used.
4. A 3x3 median filter is then applied to the filled map

Once the disparity map of the virtual view is available, one can proceed to the interframe interpolation along the disparity vectors. Two types of disparity vectors are distinguished:

• the vectors that have been defined by projection of the "J" disparity map (the main reference view in our asymmetric approach); in this case, the color of these pixels is computed from the color of the 2 endpoints of the vector in J and K;
• the vectors that have been spatially interpolated (filled areas) (step 2 above) : the corresponding pixels are supposed to be occluded in J; so, they are interpolated from K; the color of these pixels is computed from the color of the endpoint of the vector in K.

Therefore, what is seen in both views J and H is interpolated from both views in view H. On the other hand, what is not seen from J in H is interpolated from view K.

Figure 5 shows an example where the pixel $v^H$ has been assigned a disparity vector of view J (coming from pixel v). Consequently pixel $v^H$ is interpolated through disparity compensation : it results from the linear combination between the points $v^J$ and $v^K$ weighted by respectively $\alpha$ and $(1-\alpha)$ where $\alpha$ is the ratio HK/KJ. On the other hand, pixel $u^H$ did not get a vector from disparity map of J, and its vector was spatially interpolated. So, it is estimated from its disparity vector endpoint $u^k$ in view K.

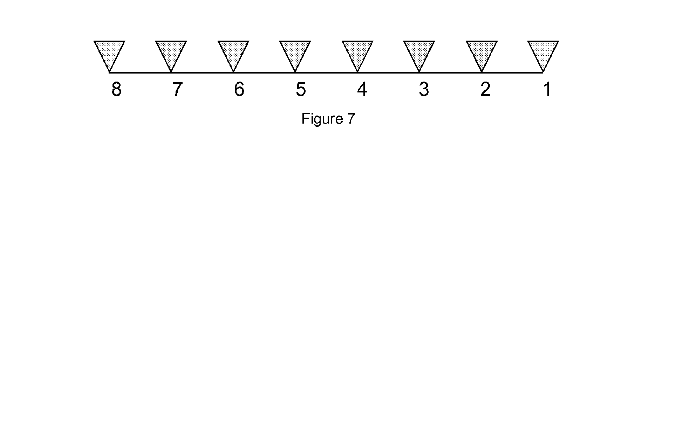

As described in the previous section, it is possible thanks to a stereo content (2 views) and the associated disparity map to generate any intermediate view in between source views. As it is shown in figure 7, if incoming views are at view 1 and 8, it is possible to interpolate any view from 2 to 7 for instance. Of course the step between each view can be as low as possible. At the end it is possible to generate any view at any distance between 8 and 1.

Several scenarii could be then defined. In case of Video On Demand (VOD), we could think about a system where you ask (download) a content with the level of depth you want to have. It can be for instance HIGH, MEDIUM or LOW level. In case of 3D broadcast content, then the user could ask for his own depth level such as he does today for sound level or color parameters. This requires to get the disparity map and the mean to interpolate views at the end user side.

Many researches have already described the fact that we are not at the same level regarding 3D acceptability. It means that for some people a given level of depth will be correctly accepted where it won't be the case for others. Human 3D perception system is complex and it is clear that some people can't even see any 3D (5% of the population is 3D blind). For some others they won't accept wearing glasses for a long period of time looking at 3D content. It will generate for these people a visual fatigue that will make the 3D experience really bad.

Currently there is no solution for a group of people where some could accept 3D experience and some can't accept it.

The subject of the invention is thus a method for generating on a display screen of defined size (SS) a 3D image including a left and a right views from an incoming video signal to be viewed by a viewer.

The method comprises the steps of:

- measuring the distance (D) between the viewer and the display screen;

- determining a disparity threshold value in relation with the defined size (SS) of the display screen and the measured distance (D) adapted to achieve a predetermined compatibility level between 2D perception and 3D perception of said 3D image;

- extracting a disparity map corresponding to the values of disparity of the pixels of said 3D image by comparing the left and the right views;

- analyzing statistical values of the disparity values of the extracted disparity map in comparison to the determined threshold value; - and thus, if the disparity level of the histogram is above the determined disparity threshold value, replacing one of the left or right view by an intermediate view that is obtained by view interpolation so that the disparity level of the histogram is below the determined threshold value.

Advantageously the invention permits the stereo content compatible with a 3D experience but also to a 2D experience at the same time.

According to one embodiment, the step of applying an view interpolation step to get an intermediate view is applied if more than a percentage of the disparity level of the histogram is above the determined disparity threshold value.

According to one embodiment, view interpolations are generated so that the disparity of the one of intermediate views with the other view is part of the initial disparity between the left and right views.

According to one embodiment, the analyzed statistical values of the disparity correspond to a disparities histogram.

In another aspect, the present invention involves a device for generating on a defined display screen of determined size (SS) a 3D image including a left view (1) and a right view (2) from an incoming video signal to be viewed at a distance by a viewer. The device comprises:

- Means for measuring the distance (D) between the viewer and the display;

- means 7 for determining a disparity threshold value in relation with the determined size of the display screen 5 and the measured distance 6 to achieve a 2D and 3D compatibility level;

- means 4 for editing a disparity map corresponding to the values of disparity between the left and the right views;

- means 8 for analyzing with an histogram the disparity values of the disparity map in comparison to the determined threshold value;

- and means 9 for replacing one of the left or right view by a view interpolation so that the disparity level of the histogram is below the determined threshold value, if the disparity level of the histogram is above the determined disparity threshold value.

According to one embodiment, the device comprises a remote control unit comprising a command allowing a 2D/3D compatibility mode.

Preferentially, the command is a press button allowing the 2D/3D compatible mode or a variator allowing the adjustment of the disparity from a minimal value to a maximal value.

These, and others aspects, features and advantages of the present disclosure will be described or become apparent from the following detailed but non limiting description which is to read in connection with the accompanying drawings.

Figure 1 illustrates a physiological binocular depth cue;
Figure 2 illustrates the relationship between the perceived depth and the parallax between left and right eye images of a stereo pair;
Figure 3 illustrates a disparity-compensated interpolation (2D view) ;
Figure 4 illustrates a disparity-compensated interpolation (1D view);
Figure 5 illustrates a disparity-compensated interpolation of view H from both views J and K;
Figure 6 illustrates the projection of the disparity map of J onto view H;
Figure 7 illustrates a two-view acquisition system and intermediate interpolated views;
Figure 8 shows a new button on the remote control;
Figure 9 represents a first embodiment with disparity map analysis;
Figure 10 represents a disparity map extraction ;
Figure 11 represents a disparity analysis;
Figure 12 illustrates the relationship between display size and viewing distance and disparity;
Figure 13 shows the disparity angle;
Figure 14 shows an illustration of cases where the view interpolation is required and is not required;

According to an aspect of the invention a stereo content will be automatically created where both 2D and 3D are compatible. By compatible, we mean that it is viewable with and without glasses. Then on a 3D screen, without glasses, the picture will look like more or less as a 2D picture. Nearly no disparity so the picture resolution in 2D is not that much decreased. This can be still accepted as a correct 2D content. On the other hand with glasses, we still perceive the remaining depth and then it is possible to enjoy the 3D effect. Typically in the same room some people will accept to wear glasses where others won't. They can enjoy the same content one looking at a 2D content with quite the full resolution, the other one wearing glasses and perceiving the depth information.

To achieve the 2D/3D compatibility, a view interpolation processing must be applied to ensure that we are at the right disparity level. The positioning of the interpolated view, related to incoming views will be determined by several parameters:

- the size of the display screen
- the distance between the viewer and the display screen
- the range of disparity values in the incoming video

In order to make the view interpolation always at the right level that allow the 3D content to be viewed both by viewers wearing glasses in order to perceive 3D effect and by viewers without glasses, these parameters must be analyzed in a continuous way. Following sections describe different embodiments of the invention.

The depth information of any given pixel of a 3D image is rendered by a disparity value corresponding to the horizontal shift of this pixel between the left-eye view and the right-eye view of this 3D image. It is possible thanks to a dense disparity map to interpolate any intermediate view in between incoming stereo views. The view interpolation will be located at a distance that can be variable from a high value (near 1) up to a very low value (near 0). If we use the left view and an interpolated view not far from the left view, the global level of disparity we could find between both views will be low. In Figure 7, if views 8 and 7 are used as left and right-eye pictures, the disparity will be divided by 7 compared to views 8 and 1. If a disparity was 35 pixels in incoming views 8 and 1, it will be only 5 between views 8 and 7.

According to an aspect of the invention a new button is created on the remote control to allow this 2D/3D compatibility.

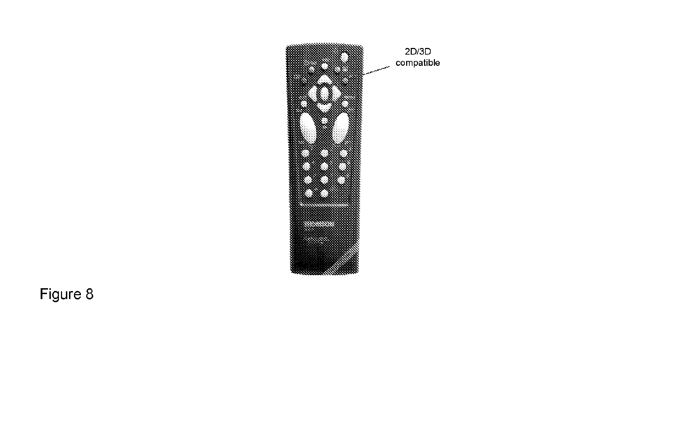

Figure 8 illustrates this new button. When the button is pressed, the 2D/3D compatible mode is enable. It will be disabled as soon as a new pressure on the button is applied. When the 2D/3D compatible mode is ON, it can be interesting to display a graphic on screen to remind viewers that they are in this mode. It could be like a "2D/3D ON" message.

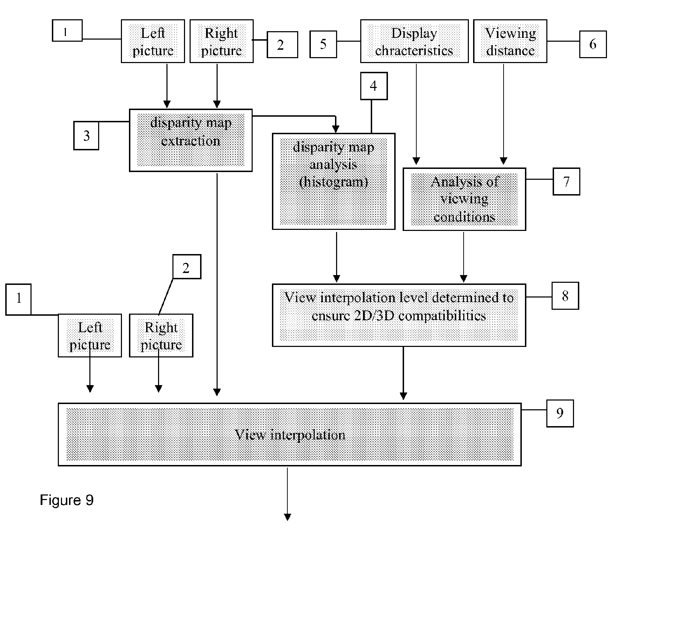

Figure 9 illustrates the overall data flow corresponding to the invention.

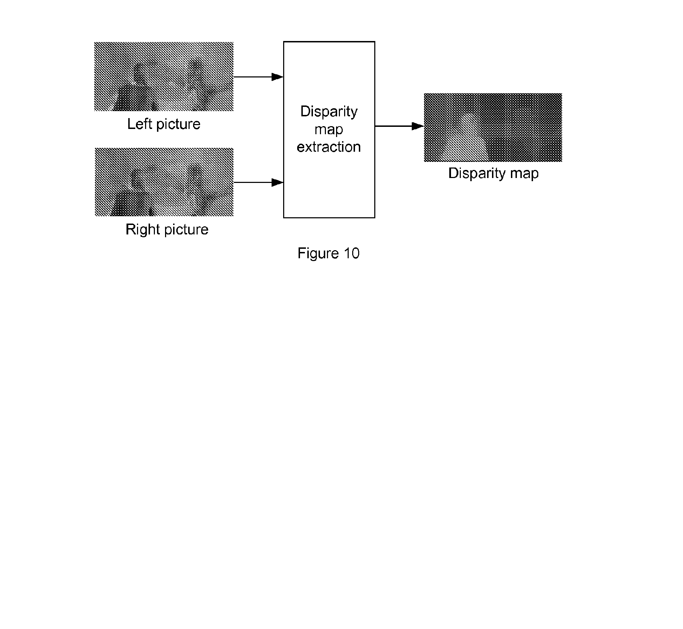

The disparity map extraction represented by block 3 is using both left and right views represented by block 1 and 2 and it generates a grey level picture representing disparity values as illustrated by figure 10. This processing is most probably done in post-production and then sent with the content. If computation resources are there, it could be also done at the receiver side.

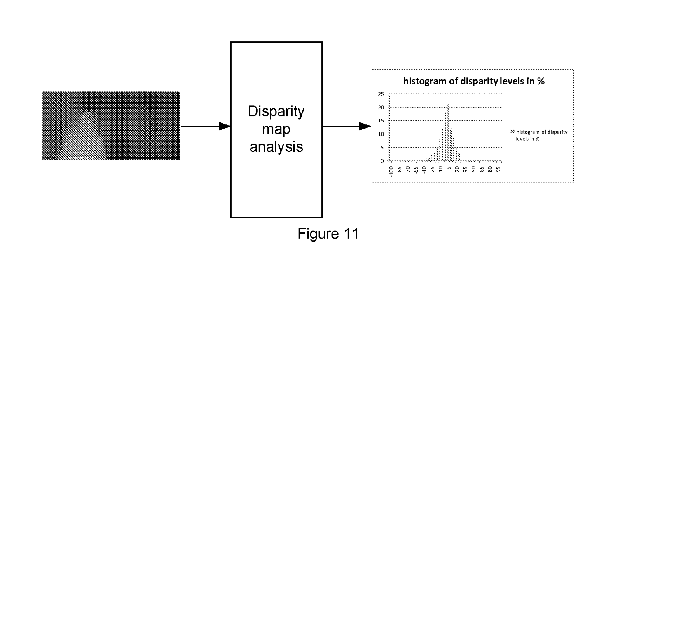

The disparity map analysis represented by block 4 figure 9, is delivering statistical values of the disparity to help the definition of the right level of depth to ensure 2D/3D compatibility. As shown in figure 11, one potential outcome is an histogram of disparity values in the map. This histogram illustrates the range of disparity values associated with the pair of left view and right view represented by block 1 and 2, and will be used to evaluate the level of depth adjustment represented by block 8 required to achieve 2D/3D compatibility.

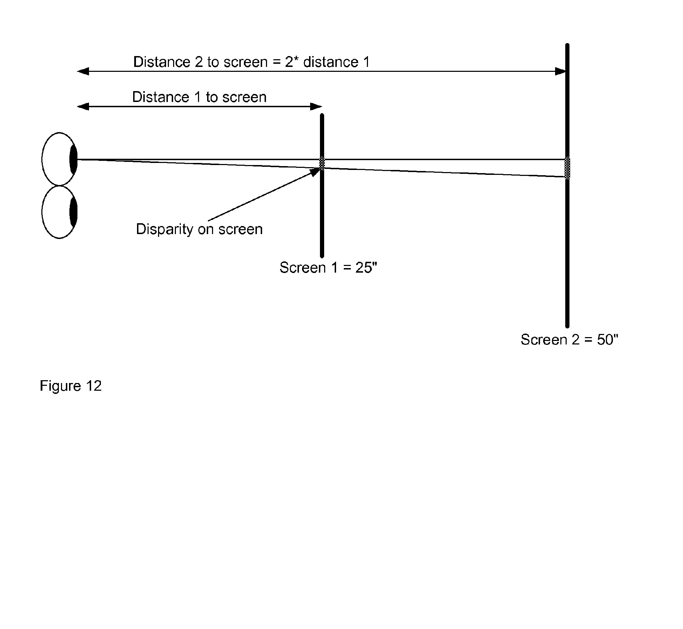

Basically information required to get the viewing conditions are the display characteristics, represented by figure 9 block 5, which are e.g. the size of the screen and the viewing distance, represented by block 6, between the viewer and the display screen. As illustrated on figure 12, there is a relationship between the size of the display screen, the viewing distance and the perception of a disparity value on the screen. For a given distance the disparity will appear twice as big on a 50" display screen compared to on a 25" one. On the other hand, the disparity on a 50" display screen will appear bigger if the viewing distance is reduced. The level of disparity is directly related to these viewing conditions.

To get this information is an important parameteras these parameters should be filled by the user when he set-up his display equipment. Since the commutation to a 2D/3D compatible mode is supposed to be in a Set Top Box STB, the size of the display screen is not necessary known. Note that the High-Definition Multimedia Interface (HDMI) between the STB and the display can provide the information relative to the display screen size and screen resolution from the display device to the viewer. Anyway it must be possible for the user to enter this information as well as the viewing condition to parameter the system. A default value should be available for system where the viewer didn't fill the information. This default value should be based on average size of display screen and average viewing distance.

The 2D/3D compatibility mode will be determined thanks to the disparity map analysis, represented by figure 9 block 4, and viewing conditions, represented by block 7. The view interpolation level determined to ensure 2D/3D compatibilities, represented by block 8, is the one that can ensure a correct 2D picture without glasses but with still a significant 3D effect with glasses. The constraint is then to ensure that a view interpolation, represented by block 9, is applied to reach the level we can accept as a 2D mode without glasses.

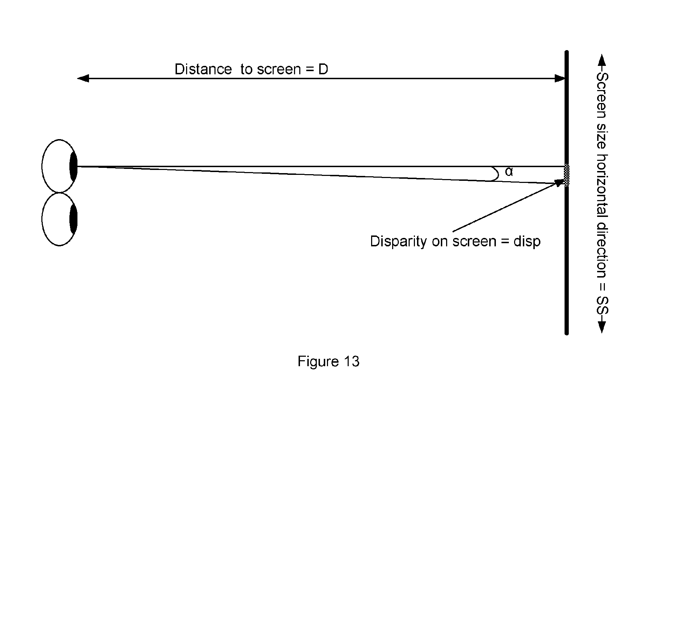

This level is corresponding to an angle ($\alpha$) as shown on figure 13.

The relationship between the angle α and the disparity is:

$$Disp = tg\alpha * D$$

The relationship between the disparity value "Disp" in cm and the disparity value in pixel "Nb_pix_disp" is expressed for a given screen horizontal resolution corresponding to the total number of pixels "Nb_pixel_tot" and screen size SS:

$$Nb\_pix\_disp = Disp * Nb\_pixel\_tot/SS$$

Or

$$Nb\_pix\_disp = tg\alpha * D * Nb\_pixel\_tot/SS$$

tgα* is a parameter that is fixed by user experience, a satisfying value is for instance 0.0013 which corresponds to 5 pixels at 2m on a 1920 pixels display with 1 m horizontal size.

If tgα is now given, then it is possible to calculate "Nb_pix_disp" in the current viewing conditions. This value will then have to be compared with the histogram provided by the disparity map analysis.

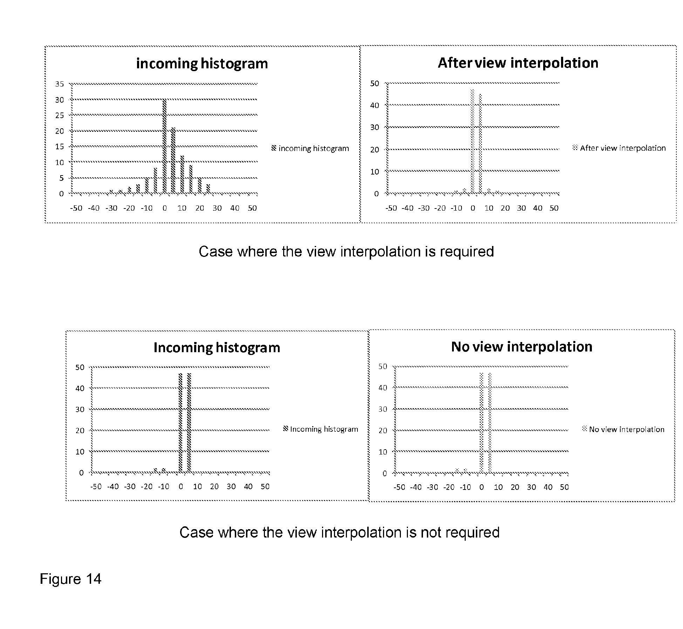

Two cases illustrated by Figure 14 can occur:

- Less than a low percentage (let say 5%) of the disparity calculated in the disparity map is above the "Nb_pix_disp" value. It means that globally the level of disparity in the content is low enough to already ensure a 2D/3D capability. Then nothing has to be done, no view interpolation is applied.

- More than a low percentage (let say 5%) of the disparity calculated in the disparity map is above the "Nb_pix disp" value. It means that globally the level of disparity in the content is not low enough to already ensure a 2D/3D capability. Then a view interpolation among the different view interpolations corresponding to different disparity values is applied to reduce globally the disparity of the content and then to ensure than we will be at the end below the low percentage of 5%.

Other strategies could be applied to determine the level of view interpolation.

- For instance instead of a simple threshold at 95%, a more complex weight approach can be used to handle high disparity. The idea could be to associate a cost to a disparity value; the cost is higher with the level of the disparity (absolute value). So at the end, the computation of the histogram associated with this cost give a global disparity-cost value that has to be compared with a threshold. A view interpolation is applied with level depending on the ratio disparity-cost value/ threshold.

- Another approach will be to consider a program as a whole for this view interpolation level. If this level is modified on a frame by frame basis, it could create some disturbing effect. For instance if an actor is progressively popping out the screen, view interpolation level will evolve in coordination leading to a strange effect. As soon as the threshold is reached, the actor will be limited to a given depth and it will not be in accordance with the scene. What we propose is to use a global parameter for the scene corresponding to the maximum of depth we will reach during this scene. Then the view interpolation level we define with the invention will be also depending on this parameter. The combination of histogram analysis and scene parameter will help to anticipate a reduction of the depth knowing the end of the scene.

The display device presents a new function on the remote control of a Set Top Box (STB) to automatically generate from an incoming stereo content a new stereo content viewable with or without glasses on a 3DTV. This new content is generated thanks to a view interpolation system. It uses both left and right incoming views and disparity information extracted from the content. It uses also the viewing condition to determine the view interpolation to be applied. The limit of depth obtained at the end is just at the limit accepted to ensure a good 2D experience for people without glasses but with still a 3D effect for people with glasses.

**Claims**

1. A method for generating on a display screen of defined size (SS) a 3D image including a left and a right view from an incoming video signal to be viewed by a viewer **characterized by** the steps of :

- measuring the distance (D) between the viewer and the display screen;
- determining a disparity threshold value in relation with the defined size (SS) of the display screen and the measured distance (D) adapted to achieve a predetermined compatibility level between 2D perception and 3D perception of said 3D image;
- extracting a disparity map corresponding to the values of disparity of the pixels of said 3D image by comparing the left and the right views;
- analyzing statistical values of the disparity values of the extracted disparity map in comparison to the determined threshold value;
- and thus, if the disparity level of the histogram is above the determined disparity threshold value, replacing one of the left or right view by an intermediate view that is obtained by view interpolation so that the disparity level of the histogram is below the determined threshold value.

2. The method as claimed in claim 1, **characterized in that** the step of applying an view interpolation step to get an intermediate view is applied if more than a percentage of the disparity level of the histogram is above the determined disparity threshold value.

3. The method as claimed in claim 1, **characterized in that** view interpolations are generated so that the disparity of the one of intermediate views with the other view is part of the initial disparity between the left and right views.

4. The method as claimed in claim 1 **characterized in that** the analyzed statistical values of the disparity correspond to a disparities histogram.

5. A device for generating on a defined display screen of determined size (SS) a 3D image including a left view( 1) and a right view (2) from an incoming video signal to be viewed at a distance by a viewer **characterized in that** the device comprises:

> - Means for measuring the distance (D) between the viewer and the display;
> - means 7 for determining a disparity threshold value in relation with the determined size of the display screen 5 and the measured distance 6 to achieve a 2D and 3D compatibility level;
> - means 4 for editing a disparity map corresponding to the values of disparity between the left and the right views;
> - means 8 for analyzing with an histogram the disparity values of the disparity map in comparison to the determined threshold value;
> - and means 9 for replacing one of the left or right view by a view interpolation so that the disparity level of the histogram is below the determined threshold value, if the disparity level of the histogram is above the determined disparity threshold value.

6. The device as claimed in Claim 5 **characterized in that** it comprises a remote control unit comprising a command allowing a 2D/3D compatibility mode.

7. The device as claimed in Claim 6 **characterized in that** the command is a press button allowing the 2D/3D compatible mode.

8. The device as claimed in claim 6 **characterized in that** the command is a variator allowing the adjustment of the disparity from a minimal value to a maximal value.

Figure 6

Figure 2

Figure 3

Figure 4

Figure 5 -

Figure 6 –

Figure 7

2D/3D
compatible

Figure 8

Left picture — 1

Right picture — 2

5 — Display chracteristics

Viewing distance — 6

3 — disparity map extraction

4 — disparity map analysis (histogram)

Analysis of viewing conditions — 7

1 — Left picture

2 — Right picture

View interpolation level determined to ensure 2D/3D compatibilities — 8

View interpolation — 9

Figure 9

Figure 10

Figure 11

Distance 2 to screen = 2* distance 1

Distance 1 to screen

Disparity on screen

Screen 1 = 25"

Screen 2 = 50"

Figure 12

Figure 13

**incoming histogram**

☒ incoming histogram

**After view interpolation**

☒ After view interpolation

Case where the view interpolation is required

**Incoming histogram**

☒ Incoming histogram

**No view interpolation**

☒ No view interpolation

Case where the view interpolation is not required

Figure 14

Europäisches
Patentamt

European
Patent Office

Office européen
des brevets

# EUROPEAN SEARCH REPORT

Application Number

EP 11 17 3451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 02/30131 A2 (UNIV NEW BRUNSWICK [CA]; ZHANG YUN [CA]) 11 April 2002 (2002-04-11) * page 4, line 3 - line 10 * * page 7, line 19 - page 8, line 9 * ----- | 1-8 | INV. H04N13/00 |
| Y | US 2009/096863 A1 (KIM YONG-TAE [KR] ET AL) 16 April 2009 (2009-04-16) * paragraph [0083] - paragraph [0095]; figures 3,5a * ----- | 1-8 | |
| A | WO 2009/020277 A1 (SAMSUNG ELECTRONICS CO LTD [KR]) 12 February 2009 (2009-02-12) * paragraph [0040] - paragraph [0043]; figure 3 * ----- | 1,5 | |

TECHNICAL FIELDS
SEARCHED (IPC)

H04N

The present search report has been drawn up for all claims

| Place of search | Date of completion of the search | Examiner |
|---|---|---|
| The Hague | 2 September 2011 | Wahba, Alexander |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 17 3451

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2011

| Patent document cited in search report | | Publication date | Patent family member(s) | | Publication date |
|---|---|---|---|---|---|
| WO 0230131 | A2 | 11-04-2002 | AU<br>CA<br>US | 1029202 A<br>2429176 A1<br>2004012670 A1 | 15-04-2002<br>11-04-2002<br>22-01-2004 |
| US 2009096863 | A1 | 16-04-2009 | NONE | | |
| WO 2009020277 | A1 | 12-02-2009 | US | 2009040295 A1 | 12-02-2009 |